# EUROPEAN PATENT SPECIFICATION

(11) **EP 4 278 808 B1**
(45) Date of publication and mention of the grant of the patent: **09.07.2025**
(21) Application number: 21918672.3
(22) Date of filing: 18.01.2021
(51) Int. Cl.: H04L 1/18, H04W 72/12, H04L 5/00

(54) **CODEBOOK CONSTRUCTION FOR POINT-TO-MULTIPOINT OPERATION IN TELECOMMUNICATION SYSTEMS**
AUFBAU EINES KODEBUCHES FÜR PUNKT-ZU-MEHRPUNKT-BETRIEB IN TELEKOMMUNIKATIONSSYSTEMEN
CONSTRUCTION DE LIVRE DE CODES POUR FONCTIONNEMENT POINT À MULTIPOINT DANS DES SYSTÈMES DE TÉLÉCOMMUNICATION

(43) Date of publication of application: 22.11.2023
(73) Proprietor: Nokia Technologies Oy, 02610 Espoo (FI)
(72) Inventor: ELMALI, Ugur Baran, 80639 Munich (DE); BHATOOLAUL, David, Swindon, Wiltshire SN25 2HD (GB); NAVRATIL, David, 00840 Helsinki (FI); ZHENG, Naizheng, Beijing 100055 (CN); PAULI, Volker, 91522 Ansbach (DE); PRASAD, Athul, Naperville, Illinois 60563 (US)
(74) Representative: Page White Farrer
(86) International application number: PCT/CN2021/072454
(87) International publication number: WO 2022/151471

(56) References cited:
- WO-A1-2020/111686
- WO-A1-2020/153709
- CN-A- 110 226 306
- CN-A- 110 324 132
- ZTE: "Mechanisms to Improve Reliability for RRC_CONNECTED UEs", vol. RAN WG1, no. e-Meeting; 20201026 - 20201113, 1 November 2020 (2020-11-01), XP052350762, Retrieved from the Internet <URL:https://ftp.3gpp.org/tsg_ran/WG1_RL1/TSGR1_103-e/Docs/R1-2008827.zip R1-2008827 Mechanisms to Improve Reliability for RRC_CONNECTED UEs.docx> [retrieved on 20201101]
- MODERATOR (HUAWEI): "FL summary#4 on improving reliability for MBS for RRC_CONNECTED UEs", vol. RAN WG1, no. E-meeting; 20201026 - 20201113, 23 November 2020 (2020-11-23), XP051958088, Retrieved from the Internet <URL:https://ftp.3gpp.org/tsg_ran/WG1_RL1/TSGR1_103-e/Inbox/R1-2009716.zip R1-2009716.docx> [retrieved on 20201123]
- MODERATOR (HUAWEI): "FL summary#3 on improving reliability for MBS for RRC_CONNECTED UEs", vol. RAN WG1, no. E-meeting; 20201026 - 20201113, 10 November 2020 (2020-11-10), XP051952879, Retrieved from the Internet <URL:https://ftp.3gpp.org/tsg_ran/WG1_RL1/TSGR1_103-e/Docs/R1-2009654.zip R1-2009654.docx> [retrieved on 20201110]
- ZTE: "Mechanisms to Improve Reliability for RRC_CONNECTED UEs", vol. RAN WG1, no. e-Meeting; 20200817 - 20200828, 8 August 2020 (2020-08-08), XP052346811, Retrieved from the Internet <URL:https://ftp.3gpp.org/tsg_ran/WG1_RL1/TSGR1_102-e/Docs/R1-2005437.zip R1-2005437 Mechanisms to Improve Reliability for RRC_CONNECTED UEs.docx> [retrieved on 20200808]
- CMCC: "Discussion on group scheduling mechanisms", 3GPP DRAFT; R1-2008034, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 23 October 2020 (2020-10-23), Mobile Competence Centre ; 650, route des Lucioles ; F-06921 Sophia-Antipolis Cedex ; France , XP051945322

## Description

### TECHNICAL FIELD

This application is directed, in general, to a multicast and broadcast service and, more specifically, to a HARQ-ACK codebook for feedback.

### BACKGROUND

When a user equipment (UE) receives services, such as multicast and broadcast services (MBS) and unicast services, the UE, at a scheduled time instance, will analyze the received signals and generate hybrid automatic repeat request-acknowledgment (HARQ-ACK) feedback. This feedback is stored in a codebook and communicated to the communication node to which the UE is communicating. When more than one service is being analyzed for a scheduled time instance, the highest priority service is used for the codebook and the feedback for the other services is dropped. It would be beneficial to be able to provide the HARQ-ACK feedback for all received services that are scheduled for the same time instance.

R1-2008827 (Mechanisms to Improve Reliability for RRC_CONNECTED UEs) and R1-2009716 (FL summary#4 on improving reliability for MBS for RRC_CONNECTED UEs) teach that regarding ACK/NACK feedback for NR MBS for UEs receiving both unicast and MBS service, the UES may generate sub-codebook for unicast and MBS service separately and concatenates the sub-codebooks together.

### SUMMARY

The invention relates to apparatuses and methods as set forth in the claims. It will be understood that aspects of the disclosures falling outside the scope of the claims may not be part of the invention but may be useful to understand the invention.

### BRIEF DESCRIPTION

Reference is now made to the following descriptions taken in conjunction with the accompanying drawings, in which:
FIG. 1 is an illustration of a diagram of an example communication scenario with a communication node and multiple user equipment (UEs);
FIG. 2 is an illustration of a diagram of an example signal flow for the configuration of a HARQ-ACK codebook;
FIG. 3 is an illustration of a flow diagram of an example method to generate a HARQ-ACK codebook;
FIG. 4 is an illustration of a flow diagram of an example method to build a concatenated HARQ-ACK codebook; and
FIG. 5 is an illustration of a block diagram of a communication system using HARQ-ACK codebooks.

### DETAILED DESCRIPTION

In the 5G 3GPP Release 17 proposed standard (3GPP), there is a work item (RP-193248) for the support of multicast and broadcast services (MBS) for new Radio (NR). Point to multi-point (PTM) transmission is expected to efficiently provision MBS services to multiple users, e.g., user equipment (UE), by utilizing the same radio framework as unicast services. A primary focus is to achieve higher efficiency and reliability than is typical using previous 3GPP releases to enable new use cases for PTM. The application of hybrid automatic repeat request (HARQ) techniques can be used to achieve the higher efficiency. For the UEs in an RRC_CONNECTED state, HARQ-acknowledgement (ACK) feedback is supported for PTM transmissions and the detailed HARQ-ACK feedback solutions can utilize ACK/negative ACK (NACK) or NACK acknowledgments. For UEs in an RRC_CONNECTED state, at least frequency-division multiplexing (FDM) between a unicast physical downlink data channel (PDSCH) and a group-common multicast PDSCH can be supported. Various types of HARQ-ACK codebooks can be utilized, for example, type-1, *e.g.,* semi-static, type-2, *e.g.,* dynamic, enhanced type-2, or type-3, at least when ACK/NACK based HARQ-ACK feedback is supported.

The specific standard referenced for this disclosure is 3GPP TS 38.331 and TS 38.21x. UE, such as mobile phones, tablets, laptops, and other 5G devices whether movable, mobile, or stationary, can establish a communication link with one or more network devices, *i.e.,* communication nodes. For example, various communication nodes can be a 5G base station (gNB), an evolved universal mobile telecommunications system (UMTS), terrestrial radio access (E-UTRA), an enhanced 4G eNodeB E-UTRA base station (eNB), *e.g.,* an enhanced Node B, an enhanced gNB (en-gNB), or a next generation eNB (ng-eNB). For purposes of this disclosure, communication nodes can be referred herein as gNB and shall include eNB. The communications between the UE and the communication node can be transferred, e.g., following the cell change, to another communication node for various reasons, for example, as the UE is moving the second communication node may be able to provide a higher quality communication link or when communication load balancing is being performed between the communication nodes.

In wireless technologies, retransmission-based error recovery techniques can be widely exploited to ensure the reliable transmission of data over a lossy channel. Typically, automatic repeat requests (ARQ), which are implemented for radio link control (RLC) acknowledged mode, and HARQ, which can be implemented in the medium access control (MAC) or physical (PHY) radio sublayer, are used to tailor the retransmission of data for improving the reliability of radio links. These methods greatly improve the spectral efficiency of communication over radio fading channels.

3GPP studies have shown that HARQ can improve transmissions in the presence of errors, such as for point to point (PTP) service delivery. When there are a large number of UEs consuming the MBS service, there are many HARQ ACK/NACK feedback messages, leading to high signaling overhead and resource inefficiency. The enhanced outer loop link adaptation (eOLLA) technique, which can adjust the modulation and coding scheme (MCS) to an increasingly conservative setting based on the worst positioned UE, is typically used as an alternative technique to attain the desired reliability level. For the same number of UEs, where the eOLLA does not react, there might be bursty errors that randomly occur over time, due to fading and power degradations, leading to loss of protocol data units. As such, maintaining a reasonably efficient MCS along with data retransmission via HARQ, for lost/decode-fail data units, can be important to improve the reliability of the link. In the presence of relatively large number of UEs, the use of a slowly changing MCS while relying on adaptive retransmissions via HARQ to take care of fast fading variations can allow for much higher spectral efficiency than schemes like eOLLA that control reliability when HARQ is not used.

To achieve that benefit, the implementation with HARQ uses a HARQ-ACK codebook which is defined for the PTM transmissions. The relevant 3GPP committees on this topic have agreed that for ACK/NACK type of HARQ-ACK feedback, type-1 and type-2 HARQ-ACK codebooks should be supported for RRC_CONNECTED UEs receiving a multicast. The 3GPP committees have not agreed on the HARQ-ACK codebook design, such as the design when more than one MBS PDSCHs are FDM-ed within one slot, nor whether enhanced type-2 or type-3 HARQ-ACK codebooks are supported. The 3GPP committees have discussed that HARQ-ACK codebook determination should be from the UE perspective when HARQ-ACK feedback is available for unicast and MBS. The options can be to generate a joint codebook for both MBS and unicast services, to generate a codebook for MBS services separately from the codebook for unicast services, or a combination thereof.

As currently specified in 3GPP REL-15, one HARQ-ACK codebook, either type-1 or type-2 depending on the radio resource control (RRC) configuration, is constructed and sent by the UE in a slot on a physical uplink control channel (PUCCH) signal or a physical uplink shared channel (PUSCH) signal, even when there are multiple PTP services that the UE is interested in and the HARQ-ACK feedback for those services are scheduled to be transmitted in the same uplink (UL) slot. In 3GPP REL-16, a sub-slot concept is introduced to overcome the REL-15 limitation that the UEs are not able to transmit more than one PUCCH or PUSCH with HARQ-ACK information in a slot, such as for the ultra-reliable and low latency case (URLLC) services with stringent requirements. Therefore, the slot-based concepts, such as a *k1-indication* in the downlink control information (DCI), are transformed into sub-slot configurations. In REL-16, one codebook per priority level, for example, high priority URLLC or low priority enhanced mobile broadband (eMBB), can be simultaneously constructed, where one of the constructed codebooks is sent in a (sub-)slot, *i.e.,* if the low priority HARQ-ACK is scheduled to be transmitted in the same (sub-)slot with the high priority HARQ-ACK, the high priority HARQ-ACK codebook is transmitted and the low priority HARQ-ACK is dropped. Therefore, one codebook is sent by the UE at a scheduled time instance, even when there could be multiple services that are scheduled to provide HARQ-ACK feedback at that same scheduled time instance.

Since different MBS PDSCHs and unicast PDSCH may be FDM-ed using UE capability in 3GPP Rel-17, construction of one semi-static codebook for different services is not possible for the PDSCH occasions of the FDM-ed transmissions using the current specifications.

In cases where a type-2 codebook is utilized, the gNB includes a downlink assignment index (DAI) field in the DCI that serves as a counter of the number of transmissions to be received by the UE in a specific slot, and for a specific time period. The UE and the gNB can have a common understanding on the size of the HARQ-ACK codebook to be produced in case there are no errors while the UE decodes the DCIs. In case of MBS transmissions, different UEs may be interested in different MBS and unicast services, therefore using the same DAI counter for different services may lead the UE and communication node to have a different understanding in the size and content of the dynamic HARQ-ACK codebook constructed by the UE. Thus, the current procedures on dynamic HARQ-ACK codebook construction may not be sufficient in cases where PTM transmissions occur.

Proposed solutions include simultaneously constructing two HARQ-ACK sub-codebooks for MBS and unicast services when their HARQ-ACK feedback is scheduled at the same later time instance and concatenate the constructed sub-codebooks to create one codebook. Other solutions include that the DAI field in PDCCH should be configured independently between unicast and MBS services, and between different MBS services, where the UE may construct one sub-codebook per MBS service when dynamic codebook is being used and concatenate the sub-codebooks.

Simultaneous construction of HARQ-ACK sub-codebooks for each of the MBS services and one sub-codebook for unicast services when their HARQ-ACK feedback is scheduled at the same time instance means that there is a concatenation of the constructed sub-codebooks in cases where services have the same priority. The concatenated codebook can be sent in one PUCCH or PUSCH resource.

In order to successfully perform the proposed solutions mentioned above for a proper HARQ-ACK feedback operation, the UE should be able to map the received PDSCH transmission to a specific sub-codebook and should follow a specific concatenation order of the sub-codebooks to have the same understanding with the communication node on the size and content of the HARQ-ACK codebook.

HARQ-ACK codebooks of type-1 and type-2 are specified in 3GPP Rel-15. HARQ-ACK codebooks of enhanced type-2 and type-3 are specified in 3GPP Rel-16. There are proposals made at the relevant 3GPP committees to construct separate HARQ-ACK codebooks for different MBS and unicast services, concatenating those codebooks, and sending them in the same PUCCH or PUSCH resource by the UE in case HARQ-ACK feedback is scheduled for the same time instance. Options for a PHY layer identification of simultaneously constructed two HARQ-ACK codebooks have been discussed at the relevant 3GPP committees, e.g., how to map a received PDSCH TB(s)'s HARQ-ACK to one of the high-priority (URLLC) or low-priority (eMBB) HARQ-ACK codebooks. The DCI field would contain a priority indicator that maps the HARQ-ACK to one of the simultaneously constructed codebooks. For semi-persistent scheduling (SPS) transmission, SPS PDSCH configuration is providing the priority indication for the mapping.

This disclosure presents methods and processes for the UEs in RRC_CONNECTED state to construct a HARQ-ACK codebook while receiving MBS transmission(s), especially in cases where there are multiple unicast or MBS services with the same priority level that are scheduled for the UE to provide HARQ-ACK feedback at the same time instance. The UE can construct separate HARQ-ACK sub-codebooks for each MBS service and one sub-codebook for unicast services, if present. The sub-codebooks can be concatenated and the UE can send the concatenated codebooks in the same PUCCH or PUSCH resource in case the respective HARQ-ACK feedback for the MBS services and unicast services are scheduled for the same time instance, e.g., slot or sub-slot. By applying the methods and processes described herein, the UEs can send one HARQ-ACK codebook while receiving different unicast and MBS services. The cost of implementation is a slightly higher amount of signaling related to the configuration of the various options.

The disclosure can utilize a process such as analyzing the feedback that should be sent from the UE to the communication node at a time when the HARQ-ACK feedback is being constructed for a scheduled time instance by the UE. If the HARQ-ACK feedback is for unicast services or for one MBS service, then the current HARQ-ACK feedback construction process can be utilized, *e.g.,* the sub-codebook can be assigned as the codebook. If the UE is scheduled to provide HARQ-ACK feedback for two or more MBS services, or one or more MBS services along with at least one unicast service then the UE can construct one sub-codebook for each MBS service and one sub-codebook for the set of unicast services, where there is at least one unicast service.

The UE can map the received physical downlink channel signals, such as a PDSCH transport block (TB), to the corresponding sub-codebook based on the group-common radio network temporary identifier (G-RNTI) used to scramble the PDCCH and PDSCH transmissions. The G-RNTI is a unique identifier of each MBS service, *i.e.,* the PHY identification of PDSCH HARQ-ACK to sub-codebook mapping can be the G-RNTI value. If the UE receives a physical downlink channel, such as PDSCH, including unicast services, whose PDCCH and PDSCH are expected to be scrambled by a radio network temporary identifier (RNTI) other than G-RNTI, PDSCH HARQ-ACK for the unicast service can be mapped to the separate sub-codebook that is constructed for unicast services.

After the construction of the separate HARQ-ACK sub-codebooks, the UE can proceed to concatenating the sub-codebooks. In some aspects, the concatenation order can be specified by the communication node. In some aspects, the concatenation order can be specified by the industry standard used by the communication node and UE. The UE should use the specified concatenation order, *e.g.,* the indicated concatenation order, so that the communication node and the UE have the same understanding of the HARQ-ACK codebook.

The concatenation order used by the UE for the sub-codebooks can utilize one of the following options. Option 1: The value of the RNTI can be utilized. The UE can concatenate the constructed HARQ-ACK sub-codebooks based on the PHY identification of the sub-codebook, *i.e.,* the G-RNTI parameter that is a 16-bit identification (ID). The concatenation can be made in one of an increasing order or a decreasing order of the corresponding G-RNTI parameters, *e.g.*, the concatenation order parameters. In some aspects, for the unicast sub-codebook, the UE can use the corresponding RNTI parameter used for scrambling the PDCCH/PDSCH transmission to determine the correct place of the unicast HARQ-ACK sub-codebook inside the concatenated codebook. In some aspects, the unicast sub-codebook can be placed at the front position or the following position of the concatenated structure of the MBS sub-codebooks.

Option 2: When the list of available MBS services is configured via a multicast control channel (MCCH), *i.e.,* the multicast traffic channels (MTCHs) are configured in a list, for example, a list similar to *sc-mtch-InfoList-r13* in LTE SC-PTM, the order of the HARQ-ACK sub-codebook concatenation can follow the order in which the MBS bearers and associated MTCHs are configured in the list. The sub-codebook constructed for unicast services can be concatenated to the front or the following position of the concatenated structure of the MBS sub-codebooks.

Option 3: When the list of available MBS services is configured using UE specific signaling, such as dedicated RRC signaling, the 5-bit DRB ID for a particular service can be utilized for the concatenation order. The concatenation can be in an increasing order or a decreasing order of concatenation parameters corresponding to the 5-bit DRB ID, *e.g.,* the concatenation order parameters.

Option 4: The concatenation order of unicast and MBS HARQ-ACK sub-codebooks can be explicitly signaled by the communication node using UE specific signaling, such as a dedicated RRC signaling, to the UE with a list of RNTIs, for example using a *MBS-concat-list-r17* field, whose order can be used to concatenate the corresponding sub-codebooks, *e.g.,* a specified RNTI list.

An example, for demonstration purposes, of the messaging changes to the 3GPP standard are shown in Table 1. Other messaging changes and different messaging changes can be utilized to implement this disclosure; Table 1 is for example.

**Table 1: Example messaging to support concatenation of multiple sub-codebooks**

| Message | Change |
|---|---|
| Message: RRCReconfiguration or RRCConnectionReconfiguration | Add field for indicating the type of concatenation ordering to utilize. |
| | Add field for indicating whether the ordering will utilize increasing order or decreasing order of the concatenation order parameters. |
| | Add field array for providing a list of RNTIs that specify an order of concatenation, e.g., MBS-concat-list-r17. |

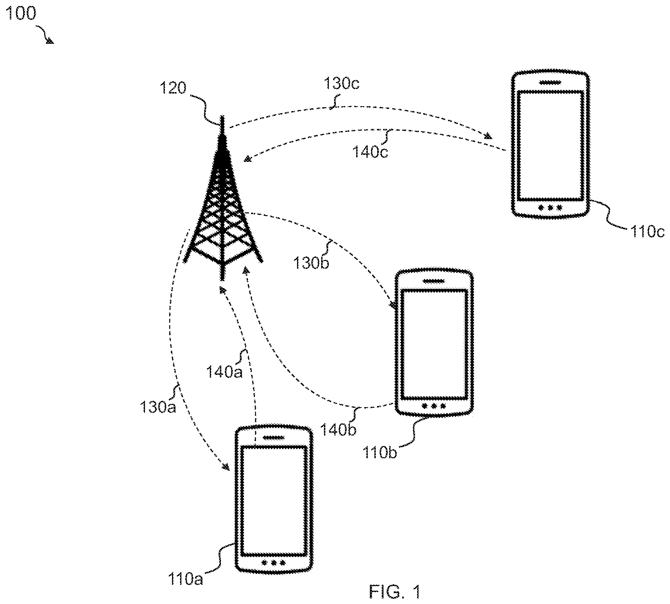

Turning now to the figures, FIG. 1 is an illustration of a diagram of an example communication scenario 100 with a gNB and multiple UEs. Communication scenario 100 is a demonstration of one type of environment for this disclosure. The environment for communication scenario 100 includes a UE 110a, a UE 110b, a UE 110c (collectively, UEs 110), and a gNB 120. UEs 110 are in an RRC_CONNECTED state with gNB 120. gNB 120 is communicating MBS and unicast services. There can be fewer or additional user equipment in UEs 110.

An example set of messages are shown in communication scenario 100. UE 110a is receiving a combination of one or more of MBS or unicast services through message 130a. Likewise, UE 110b is receiving a combination of one or more MBS or unicast services through message 130b and UE 110c is receiving a combination of one or more MBS or unicast services through message 130c, (collectively, services 130). If there is more than one MBS service or if there is at least one MBS service and at least one unicast service, the UEs 110 would utilize the methods and processes disclosed herein to generate and concatenate a respective HARQ-ACK codebook.

UE 110a can communicate its HARQ-ACK codebook to gNB 120 using messaging 140a. Likewise, UE 110b can communicate its HARQ-ACK codebook to gNB 120 using messaging 140b, and UE 110c can communicate its HARQ-ACK codebook to gNB 120 using messaging 140c, (collectively, messages 140).

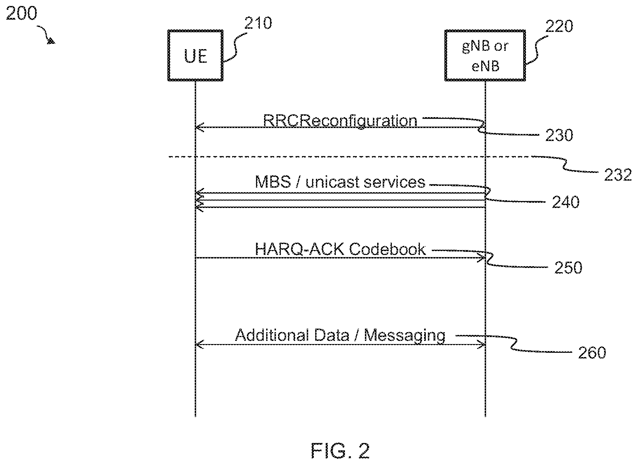

FIG. 2 is an illustration of a diagram of an example signal flow 200 for the configuration of a HARQ-ACK codebook. Signal flow 200 demonstrates one aspect of the disclosure to generate the HARQ-ACK codebook. Signal flow 200 has an UE 210 and a gNB 220.

A signal 230 is shown being communicated from gNB 220 to UE 210. Signal 230 can be a connection reconfiguration message, such as a RRCReconfiguration or a RRCConnectionReconfiguration message, specifying the type of HARQ-ACK that the UE should utilize as well as the concatenation method to utilize. Dashed line 232 indicates that signal 230 can be sent at an earlier time than that for an MBS or unicast service, for example, at a time at which an RRC_CONNECTED state is established, at a time when signal 240 is transmitted, or at another time when the UE is in an RRC_CONNECTED state with the communication node. Signal 240 can be an MBS service, a unicast service, or a combination thereof. Signal 240 is shown with multiple communication arrows to indicate that signal 240 can be one or more MBS or unicast services.

A signal 250 is communicated from UE 210 and specifies the HARQ-ACK codebook for UE 210, such as using a PUSCH or PUCCH signal. Signal 250 is generated by UE 210 according to the HARQ-ACK configuration as specified in signal 230. In some aspects, an additional signaling 260 indicates that action can be taken by gNB 220, such as a recommunication, e.g., retransmission, of signal 240 if the HARQ-ACK codebook indicates an error. In some aspects, additional signaling 260 can be other communications.

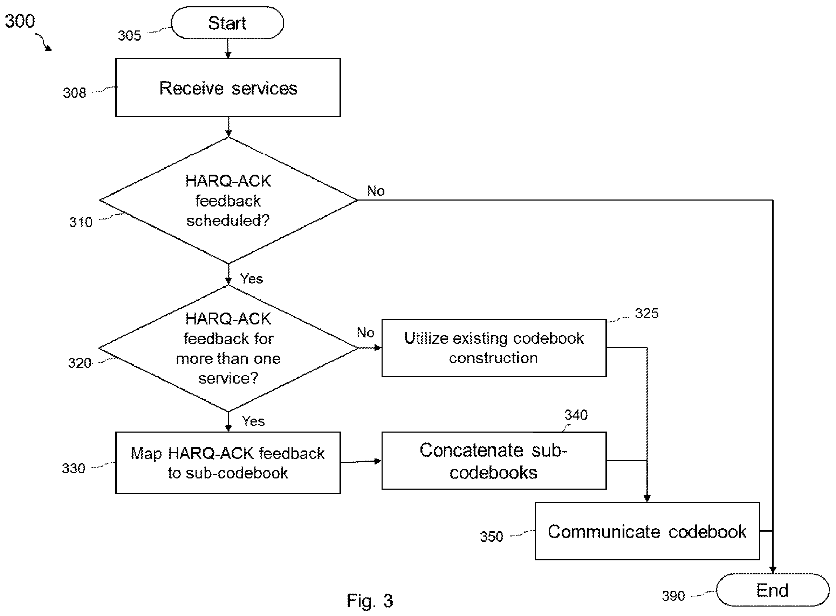

FIG. 3 is an illustration of a flow diagram of an example method 300 to generate a HARQ-ACK codebook. Method 300 can be implemented on a set of network devices and communication nodes, such as a gNB, an eNB, an en-gNB, a ng-eNB, and a UE. Method 300 can be encapsulated in software code or in hardware, for example, an application, a code library, a dynamic link library, a module, a function, a RAM, a ROM, and other software and hardware implementations. The software can be stored in a file, database, or other computing system storage mechanism. Method 300 can be partially implemented in software and partially in hardware.

Method 300 starts at a step 305 and proceeds to a step 308. In step 308, the UE can receive one or more services, such as one or more MBS services or zero or more unicast services. For each received service, there can be an analysis on the service to determine the HARQ-ACK feedback for each received service. Proceeding to a decision step 310, a determination is made on whether a HARQ-ACK feedback is scheduled. The time instance used for determining the schedule can be provided by the communication node in a DCI message received at a prior time. In addition, the type of HARQ-ACK codebook to use as well as the concatenation order to use can be specified by the communication node in a connection reconfiguration message, such as a RRCReconfiguration or a RRCConnectionReconfiguration message. Method 300 is independent of the HARQ-ACK codebook type that the UE is configured by the communication node to construct, *e.g.*, type-1, type-2, enhanced type-2, or type-3 codebook can be configured individually for any service. If decision step 310 is 'Yes', method 300 proceeds to a decision step 320. If decision step 310 is 'No', method 300 proceeds to a step 390.

In decision step 320, the UE can determine whether there is more than one MBS service that requires HARQ-ACK feedback at the scheduled time instance. The UE can also determine if there is at least one MBS and at least one unicast service that requires HARQ-ACK feedback at the scheduled time instance. If decision step 320 is 'Yes', method 300 proceeds to a step 330. If decision step 320 is 'No', method 300 proceeds to a step 325.

Proceeding to step 325, in cases where there is not a need for a complex HARQ-ACK codebook containing feedback for more than one service, the UE can utilize existing industry standards to generate the HARQ-ACK codebook. Method 300 proceeds to step 350.

Proceeding to step 330, the UE can generate two or more HARQ-ACK sub-codebooks for the various MBS or unicast services that have a HARQ-ACK feedback scheduled at the time instance, *e.g*., map the HARQ-ACK feedback to the sub-codebook. The UE can construct the sub-codebooks based on the current codebook construction mechanisms, for example, as specified in 3GPP Rel-15 or 3GPP Rel-16. The UE can map the HARQ-ACK feedback bit corresponding to the received physical downlink channel, such as PDSCH, transmissions to different HARQ-ACK sub-codebooks that the UE constructs. Method 300 proceeds to a step 340.

In step 340, the UE can concatenate the two or more sub-codebooks using the scheme as specified by the communication node to generate one concatenated HARQ-ACK codebook. In some aspects, in cases where the UE receives services that have different priorities, the lower priority sub-codebooks can be dropped. In some aspects, the RNTI value can be used to determine the concatenation order. In some aspects, the MTCH list order can be used to determine the concatenation order. In some aspects, the DRB-identity for a particular service can be used to determine the concatenation order. In some aspects, the communication node can specify the concatenation order, which can provide greater flexibility to the communication node for optimizations. In some aspects, a sub-codebook for unicast services can be concatenated at a front position or a following position of a concatenated structure of sub-codebooks for the MBS services. Method 300 proceeds to step 350.

In step 350, the concatenated codebook, which can be one codebook if one sub-codebook is generated, can be communicated to the communication node to which the UE is communicating, such as using a physical uplink channel, for example, PUCCH or PUSCH. In step 390, method 300 ends.

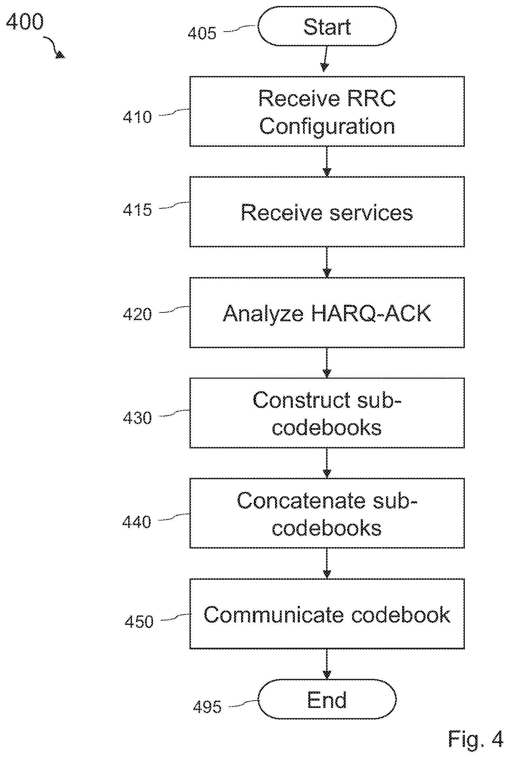

FIG. 4 is an illustration of a flow diagram of an example method 400 to build a concatenated HARQ-ACK codebook. Method 400 can be implemented on a set of network devices and communication nodes, such as a gNB, an eNB, an en-gNB, a ng-eNB, and a UE. Method 400 can be encapsulated in software code or in hardware, for example, an application, a code library, a dynamic link library, a module, a function, a RAM, a ROM, and other software and hardware implementations. The software can be stored in a file, database, or other computing system storage mechanism. Method 400 can be partially implemented in software and partially in hardware

Method 400 starts at step 405 and proceeds to a step 410 where the UE can receive configuration information from a communication node, such as an indicated concatenation order. The configuration information can include information on concatenation ordering, such as the method to use, whether to use increasing or decreasing order of an identifier such as RNTIs, or to provide an ordered list of RNTIs. This information can be received in a connection reconfiguration message, such as a RRCReconfiguration or a RRCConnectionReconfiguration message.

In a step 415, the UE can receive one or more services during the course of operations, such as MBS services and unicast services. In a step 420, each received service can be analyzed by the UE to generate HARQ-ACK feedback for each service. The services can be grouped by the scheduled time instance which is a time when the HARQ-ACK should be communicated to the communication node.

In a step 430, the UE can construct one or more sub-codebooks using the results of the analyzing from step 420. The mapping from the analyzing to the sub-codebooks can utilize the G-RNTI or RNTI parameters.

In a step 440, the UE can concatenate the sub-codebooks into one concatenated HARQ-ACK codebook. If there is one sub-codebook, such as if there is one MBS service, or unicast services and no MBS services, then that sub-codebook becomes the concatenated HARQ-ACK codebook. When there is more than one sub-codebook, one type of concatenation order can be utilized, such as specified in the received configuration.

In some aspects, the identified concatenation order can utilize a G-RNTI for the MBS services, and an RNTI for the unicast services. In some aspects, the identified concatenation order can utilize a received list of available MBS services, such as configured by a MCCH. In some aspects, a sub-codebook for the unicast services can be concatenated at a front position or a following position of the concatenated structure of the sub-codebooks for the MBS services. In some aspects, the identified concatenation order can utilize a 5-bit DRB identity when a list of available MBS services is configured, for example, by UE specific signaling. In some aspects, the concatenation order can utilize an order specified by the communication node using a UE specific signaling, such as RRC signaling, with a list of RNTIs. In some aspects, the concatenation order can utilize an increasing order of the concatenation parameters. In some aspects, the concatenation order can utilize a decreasing order of the concatenation parameters.

Proceeding to a step 450, the concatenated codebook can be communicated to the communication node with which the UE is communicating, such as using a physical uplink channel, for example, PUCCH or PUSCH. Method 400 ends at a step 495.

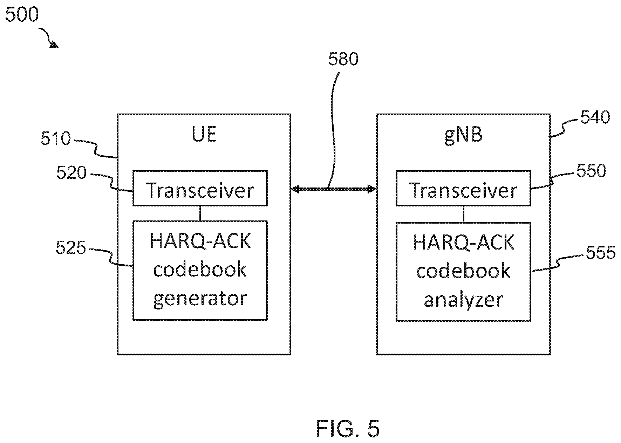

FIG. 5 is an illustration of a block diagram of a communication system 500 using HARQ-ACK codebooks. Communication system 500 is an example system and could have additional communication nodes and additional UEs. Communication system 500 has a UE 510 and a communication node 540, shown as a gNB in this example.

UE 510 has a transceiver 520 capable of receiving communication signals and transmitting communication signals with communication node 540 using signal connection 580. UE 510 has a HARQ-ACK codebook generator 525, which can be a processor. HARQ-ACK codebook generator 525 is capable of communicating with transceiver 520. HARQ-ACK codebook generator 525 is capable to mapping HARQ-ACK feedback for one or more MBS services or unicast services to their own respective sub-codebooks. HARQ-ACK codebook generator 525 is further capable of concatenating the respective sub-codebooks to generate a concatenated HARQ-ACK codebook that can be communicated to communication node 540. HARQ-ACK codebook generator 525 can utilize a received concatenation order, such as a concatenation order received from communication node 540. In some aspects, HARQ-ACK codebook generator 525 can utilize a different concatenation order when connected to a different communication node, such as a communication nodes from varying carriers.

Communication node 540 has a transceiver 550 capable of receiving communication signals and transmitting communication signals with UE 510 using signal connection 580. Communication node 540 has a HARQ-ACK codebook analyzer 555 that is capable of analyzing the received concatenated HARQ-ACK codebook and providing information to other systems of communication node 540. HARQ-ACK codebook analyzer 555 is operable to communicate with transceiver 550. HARQ-ACK codebook analyzer 555 is operable to communicate a concatenation order. In some aspects, HARQ-ACK codebook analyzer 555 is a processor. HARQ-ACK codebook analyzer 555 is capable of initiating further actions utilizing the results of the analyzing, for example, to recommunicate an MBS service packet or a unicast service packet where an analyzation of the concatenated HARQ-ACK codebook indicates a retransmission request. The elements of UE 510 and communication node 540 are shown as a functional view, where the implementation can be by software, hardware, or a combination thereof. In some aspects, the functions shown can be combined with other functions of the respective UE 510 or communication node 540.

A portion of the above-described apparatus, systems or methods may be embodied in or performed by various analog or digital data processors, wherein the processors are programmed or store executable programs of sequences of software instructions to perform one or more of the steps of the methods. A processor may be, for example, a programmable logic device such as a programmable array logic (PAL), a generic array logic (GAL), a field programmable gate arrays (FPGA), or another type of computer processing device (CPD). The software instructions of such programs may represent algorithms and be encoded in machine-executable form on non-transitory digital data storage media, e.g., magnetic or optical disks, random-access memory (RAM), magnetic hard disks, flash memories, and/or read-only memory (ROM), to enable various types of digital data processors or computers to perform one, multiple, or all of the steps of one or more of the above-described methods, or functions, systems or apparatuses described herein.

Portions of disclosed examples or aspects may relate to computer storage products with a non-transitory computer-readable medium that have program code thereon for performing various computer-implemented operations that embody a part of an apparatus, device or carry out the steps of a method set forth herein. Non-transitory used herein refers to all computer-readable media except for transitory, propagating signals. Examples of non-transitory computer-readable media include, but are not limited to: magnetic media such as hard disks, floppy disks, and magnetic tape; optical media such as CD-ROM disks; magnetooptical media such as floppy disks; and hardware devices that are specially configured to store and execute program code, such as ROM and RAM devices. Examples of program code include machine code, such as produced by a compiler, and files containing higher level code that may be executed by the computer using an interpreter.

In interpreting the disclosure, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

Those skilled in the art to which this application relates will appreciate that other and further additions, deletions, substitutions, and modifications may be made to the described aspects. It is also to be understood that the terminology used herein is for the purpose of describing particular aspects only, and is not intended to be limiting, since the scope of the present disclosure will be limited only by the claims. Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, a limited number of the exemplary methods and materials are described herein.

## Claims

1. An apparatus, comprising:
means configured for receiving (415) multicast and broadcast services, MBS, and unicast services;
means configured for mapping (430) hybrid automatic repeat request-acknowledgement, HARQ-ACK, feedback for each MBS service in MBS services to a respective multicast and broadcast HARQ-ACK sub-codebook;
means configured for mapping (430) a HARQ-ACK feedback for the unicast services to a unicast HARQ-ACK sub-codebook;
means configured for concatenating (440) the respective multicast and broadcast HARQ-ACK sub-codebooks and unicast HARQ-ACK sub-codebook to a concatenated HARQ-ACK codebook using a concatenation order, wherein the concatenation order is an increasing order or a decreasing order of group-common radio network temporary identifier, G-RNTI, parameters for the MBS services and a radio network temporary identifier, R-NTI, parameter for the unicast services, and
means configured for communicating (450) the concatenated HARQ-ACK codebook.

2. The apparatus according to claim 1, wherein the concatenation order is received by the processor using a connection reconfiguration message.

3. The apparatus according to any one of claims 1-2, wherein the means for mapping (430) HARQ-ACK feedback for the each MBS service utilizes the G-RNTI parameters for the MBS services, and the means for mapping (430) HARQ-ACK feedback for the unicast services utilizes the RNTI for the unicast services.

4. The apparatus according to any one of claims 1-3, wherein the concatenation order utilizes at least one of the following:
a list of available MBS services; or
a 5-bit data radio bearer, DRB, identity that is signaled using a UE specific signaling; or
a specified RNTI list received in a UE specific signaling.

5. The apparatus according to any one of claims 1-4 wherein the MBS services include at least one MBS service and the unicast services include at least one unicast service, and wherein the unicast HARQ-ACK sub-codebook corresponding to the unicast services is concatenated to one of:
a front position of a concatenated structure of the respective multicast and broadcast HARQ-ACK sub-codebooks corresponding to the MBS services; or
a following position of a concatenated structure of the respective multicast and broadcast HARQ-ACK sub-codebooks corresponding to the MBS services.

6. The apparatus according to any one of claims 1-5, wherein the apparatus is a user equipment, UE, comprising a HARQ-ACK codebook generator.

7. An apparatus, comprising:
means configured for receiving a concatenated hybrid automatic repeat request-acknowledgement, HARQ-ACK, codebook, wherein the concatenated HARQ-ACK codebook comprises multicast and broadcast HARQ-ACK sub-codebooks mapped to each MBS service in MBS services and a unicast HARQ-ACK sub-codebook mapped to unicast services concatenated using a concatenation order, wherein the concatenation order is an increasing order or a decreasing order of group-common radio network temporary identifier, G-RNTI, parameters for the MBS services and a radio network temporary identifier, R-NTI, parameter for the unicast services.

8. The apparatus according to claim 7, wherein the processor is further operable to recommunicate a MBS packet or a unicast service packet where the concatenated HARQ-ACK codebook indicates a retransmission request.

9. The apparatus according to any one of claims 7-8, wherein the processor is further operable to communicate the concatenation order that is used to generate the concatenated HARQ-ACK codebook.

10. The apparatus according to claim 9, wherein the concatenation order utilizes at least one of the following:
a list of available MBS services; or
a 5-bit data radio bearer, DRB, identity; or
a specified RNTI list.

11. The apparatus according to any one of claims 7-10, wherein the apparatus is a communication node, and wherein the communication node is one of a 5G base station, gNB, an enhanced Node B, eNB, an enhanced gNB, en-gNB, or a next generation eNB, ng-eNB.

12. A method comprising:
receiving (415) multicast and broadcast services, MBS, and unicast services;
mapping (430) hybrid automatic repeat request-acknowledgement, HARQ-ACK, feedback for each MBS service in MBS services to a respective multicast and broadcast HARQ-ACK sub-codebook;
mapping (430) a HARQ-ACK feedback for the unicast services to a unicast HARQ-ACK sub-codebook;
concatenating (440) the respective multicast and broadcast HARQ-ACK sub-codebooks and unicast HARQ-ACK sub-codebook into a concatenated HARQ-ACK codebook using a concatenation order, wherein the concatenation order is an increasing order or a decreasing order of group-common radio network temporary identifier, G-RNTI, parameters for the MBS services and a radio network temporary identifier, R-NTI, parameter for the unicast services, and
communicating (450) the concatenated HARQ-ACK codebook at a time instance.

13. The method according to claim 12, wherein the concatenation order is received using a connection reconfiguration message.

14. A method comprising:
receiving a concatenated hybrid automatic repeat request-acknowledgement, HARQ-ACK, codebook, wherein the concatenated HARQ-ACK codebook comprises multicast and broadcast HARQ-ACK sub-codebooks mapped to each MBS service in MBS services and a unicast HARQ-ACK sub-codebook mapped to unicast services concatenated using a concatenation order, wherein the concatenation order is an increasing order or a decreasing order of group-common radio network temporary identifier, G-RNTI, parameters for the MBS services and a radio network temporary identifier, R-NTI, parameter for the unicast services.

15. The method according to claim 14, comprising:
recommunicating a MBS packet or a unicast service packet where the concatenated HARQ-ACK codebook indicates a retransmission request.

## Patentansprüche

1. Vorrichtung, die Folgendes umfasst:
Mittel, die zum Empfangen (415) von Multicast- und Broadcastdiensten, MBS, und von Unicastdiensten ausgelegt sind;
Mittel, die zum Zuordnen (430) einer hybriden automatischen Wiederholungsanforderungsbestätigungs(HARQ-ACK)-Rückmeldung für jeden MBS-Dienst in MBS-Diensten zu einem jeweiligen Multicast- und Broadcast-HARQ-ACK-Untercodebuch ausgelegt sind;
Mittel, die zum Zuordnen (430) einer HARQ-ACK-Rückmeldung für die Unicastdienste zu einem Unicast-HARQ-ACK-Untercodebuch ausgelegt sind;
Mittel, die zum Verketten (440) der jeweiligen Multicast-und Broadcast-HARQ-ACK-Untercodebücher und des Unicast-HARQ-ACK-Untercodebuchs unter Verwendung einer Verkettungsreihenfolge mit einem verketteten HARQ-ACK-Codebuch ausgelegt sind, wobei die Verkettungsreihenfolge eine aufsteigende Reihenfolge oder eine absteigender Reihenfolge von gruppengemeinsamen temporären Funknetzwerkkennungs(G-RNTI)-Parametern für die MBS-Dienste und einem temporären Funknetzwerkkennungs(R-NTI)-Parameter für die Unicastdienste ist, und
Mittel, die zum Kommunizieren (450) des verketteten HARQ-ACK-Codebuchs ausgelegt sind.

2. Vorrichtung nach Anspruch 1, wobei die Verkettungsreihenfolge vom Prozessor unter Verwendung einer Verbindungsneuauslegungsnachricht empfangen wird.

3. Vorrichtung nach einem der Ansprüche 1 bis 2, wobei die Mittel zum Zuordnen (430) einer HARQ-ACK-Rückmeldung für jeden MBS-Dienst die G-RNTI-Parameter für die MBS-Dienste nutzen, und die Mittel zum Zuordnen (430) einer HARQ-ACK-Rückmeldung für die Unicastdienste die RNTI für die Unicastdienste nutzen.

4. Vorrichtung nach einem der Ansprüche 1 bis 3, wobei die Verkettungsreihenfolge mindestens eines von Folgendem nutzt:
einer Liste von verfügbaren MBS-Diensten; oder
einer 5-Bitdatenfunkträger(DRB)-Identität, die unter Verwendung einer UE-spezifischen Signalisierung signalisiert wird; oder
einer spezifizierten RNTI-Liste, die in einer UE-spezifischen Signalisierung empfangen wird.

5. Vorrichtung nach einem der Ansprüche 1 bis 4, wobei die MBS-Dienste mindestens einen MBS-Dienst beinhalten und die Unicastdienste mindestens einen Unicastdienst beinhalten, und wobei das Unicast-HARQ-ACK-Untercodebuch, das den Unicastdiensten entspricht, mit einem von Folgendem verkettet ist:
einer vorderen Position einer verketteten Struktur der jeweiligen Multicast- und Broadcast-HARQ-ACK-Untercodebücher, die den MBS-Diensten entsprechen; oder
einer nachfolgenden Position einer verketteten Struktur der jeweiligen Multicast- und Broadcast-HARQ-ACK-Untercodebücher, die den MBS-Diensten entsprechen.

6. Vorrichtung nach einem der Ansprüche 1 bis 5, wobei die Vorrichtung eine Teilnehmereinrichtung, UE, ist, die einen HARQ-ACK-Codebuchgenerator umfasst.

7. Vorrichtung, die Folgendes umfasst:
Mittel, die zum Empfangen eines verketteten hybriden automatischen Wiederholungsanforderungsbestätigungs(HARQ-ACK)-Codebuchs ausgelegt sind, wobei das verkettete HARQ-ACK-Codebuch Multicast- und Broadcast-HARQ-ACK-Untercodebücher, die jedem MBS-Dienst in MBS-Diensten zugeordnet sind, und ein Unicast-HARQ-ACK-Untercodebuch, das Unicastdiensten zugeordnet ist, die unter Verwendung einer Verkettungsreihenfolge verkettet sind, umfasst, wobei die Verkettungsreihenfolge eine aufsteigende Reihenfolge oder eine absteigender Reihenfolge von gruppengemeinsamen temporären Funknetzwerkkennungs(G-RNTI)-Parametern für die MBS-Dienste und einem temporären Funknetzwerkkennungs(R-NTI)-Parameter für die Unicastdienste ist.

8. Vorrichtung nach Anspruch 7, wobei der Prozessor ferner betreibbar ist, ein MBS-Paket oder ein Unicastdienstpaket erneut zu kommunizieren, wo das verkettete HARQ-ACK-Codebuch eine Neuübertragungsanforderung anzeigt.

9. Vorrichtung nach einem der Ansprüche 7 bis 8, wobei der Prozessor ferner betreibbar ist, die Verkettungsreihenfolge, die zum Erzeugen des verketteten HARQ-ACK-Codebuchs verwendet wird, zu kommunizieren.

10. Vorrichtung nach Anspruch 9, wobei die Verkettungsreihenfolge mindestens eines von Folgendem nutzt:
einer Liste von verfügbaren MBS-Diensten; oder
einer 5-Bitdatenfunkträger(DRB)-Identität; oder
einer spezifizierten RNTI-Liste.

11. Vorrichtung nach einem der Ansprüche 7 bis 10, wobei die Vorrichtung ein Kommunikationsknoten ist, und wobei der Kommunikationsknoten eines von einer 5G-Basisstation, gNB, einem Enhanced Node B, eNB, einer Enhanced gNB, en-gNB, oder einem Next-Generation-eNB, ng-eNB, ist.

12. Verfahren, das Folgendes umfasst:
Empfangen (415) von Multicast- und Broadcastdiensten, MBS, und von Unicastdiensten;
Zuordnen (430) einer hybriden automatischen Wiederholungsanforderungsbestätigungs(HARQ-ACK)-Rückmeldung für jeden MBS-Dienst in MBS-Diensten zu einem jeweiligen Multicast- und Broadcast-HARQ-ACK-Untercodebuch;
Zuordnen (430) einer HARQ-ACK-Rückmeldung für die Unicastdienste zu einem Unicast-HARQ-ACK-Untercodebuch;
Verketten (440) der jeweiligen Multicast- und Broadcast-HARQ-ACK-Untercodebücher und des Unicast-HARQ-ACK-Untercodebuchs unter Verwendung einer Verkettungsreihenfolge mit einem verketteten HARQ-ACK-Codebuch, wobei die Verkettungsreihenfolge eine aufsteigende Reihenfolge oder eine absteigender Reihenfolge von gruppengemeinsamen temporären Funknetzwerkkennungs(G-RNTI)-Parametern für die MBS-Dienste und einem temporären Funknetzwerkkennungs(R-NTI)-Parameter für die Unicastdienste ist, und
Kommunizieren (450) des verketteten HARQ-ACK-Codebuchs zu einer Zeitinstanz.

13. Verfahren nach Anspruch 12, wobei die Verkettungsreihenfolge unter Verwendung einer Verbindungsneuauslegungsnachricht empfangen wird.

14. Verfahren, das Folgendes umfasst:
Empfangen eines verketteten hybriden automatischen Wiederholungsanforderungsbestätigungs(HARQ-ACK)-Codebuchs, wobei das verkettete HARQ-ACK-Codebuch Multicast- und Broadcast-HARQ-ACK-Untercodebücher, die jedem MBS-Dienst in MBS-Diensten zugeordnet sind, und ein Unicast-HARQ-ACK-Untercodebuch, das Unicastdiensten zugeordnet ist, die unter Verwendung einer Verkettungsreihenfolge verkettet sind, umfasst, wobei die Verkettungsreihenfolge eine aufsteigende Reihenfolge oder eine absteigender Reihenfolge von gruppengemeinsamen temporären Funknetzwerkkennungs(G-RNTI)-Parametern für die MBS-Dienste und einem temporären Funknetzwerkkennungs(R-NTI)-Parameter für die Unicastdienste ist.

15. Verfahren nach Anspruch 14, das Folgendes umfasst:
erneutes Kommunizieren eines MBS-Pakets oder eines Unicastdienstpakets, wo das verkettete HARQ-ACK-Codebuch eine Neuübertragungsanforderung anzeigt.

## Revendications

1. Appareil, comprenant :
des moyens configurés pour recevoir (415) des services de multidiffusion et de diffusion, MBS, et des services de monodiffusion ;
des moyens configurés pour mapper (430) une rétroaction d'accusé de réception de demande de répétition automatique hybride, HARQ-ACK, pour chaque service MBS des services MBS à un sous-livre de codes HARQ-ACK de multidiffusion et de diffusion respectif ;
des moyens configurés pour mapper (430) une rétroaction HARQ-ACK pour les services de monodiffusion à un sous-livre de codes HARQ-ACK de monodiffusion ;
des moyens configurés pour concaténer (440) les sous-livres de codes HARQ-ACK de multidiffusion et de diffusion respectifs et un sous-livre de codes HARQ-ACK de monodiffusion en un livre de codes HARQ-ACK concaténé en utilisant un ordre de concaténation, dans lequel l'ordre de concaténation est un ordre croissant ou un ordre décroissant de paramètres d'identifiant temporaire de réseau radio commun de groupe, G-RNTI, pour les services MBS, et d'un paramètre d'identifiant temporaire de réseau radio, R-NTI, pour les services de monodiffusion, et
des moyens configurés pour communiquer (450) le livre de codes HARQ-ACK concaténé.

2. Appareil selon la revendication 1, dans lequel l'ordre de concaténation est reçu par le processeur en utilisant un message de reconfiguration de connexion.

3. Appareil selon l'une des revendications 1 et 2, dans lequel les moyens pour mapper (430) une rétroaction HARQ-ACK pour chaque service MBS utilisent les paramètres G-RNTI pour les services MBS, et les moyens pour mapper (430) une rétroaction HARQ-ACK pour les services de monodiffusion utilisent le RNTI pour les services de monodiffusion.

4. Appareil selon l'une des revendications 1 à 3, dans lequel l'ordre de concaténation utilise au moins l'un des éléments suivants :
une liste de services MBS disponibles ;
une identité de support radio de données, DRB, de 5 bits qui est signalée en utilisant une signalisation spécifique à l'UE ; ou
une liste RNTI spécifiée reçue dans une signalisation spécifique à l'UE.

5. Appareil selon l'une des revendications 1 à 4, dans lequel les services MBS comportent au moins un service MBS, et les services de monodiffusion comportent au moins un service de monodiffusion, et dans lequel le sous-livre de codes HARQ-ACK de monodiffusion correspondant aux services de monodiffusion est concaténé en l'une parmi :
une position avant d'une structure concaténée des sous-livres de codes HARQ-ACK de multidiffusion et de diffusion respectifs correspondant aux services MBS ; ou
une position suivante d'une structure concaténée des sous-livres de codes HARQ-ACK de multidiffusion et de diffusion respectifs correspondant aux services MBS.

6. Appareil selon l'une des revendications 1 à 5, dans lequel l'appareil est un équipement utilisateur, UE, comprenant un générateur de livre de codes HARQ-ACK.

7. Appareil, comprenant :
des moyens configurés pour recevoir un livre de codes d'accusé de réception de demande de répétition automatique hybride, HARQ-ACK, concaténé, dans lequel le livre de codes HARQ-ACK concaténé comprend des sous-livres de codes HARQ-ACK de multidiffusion et de diffusion mappés à chaque service MBS des services MBS, et un sous-livre de codes HARQ-ACK de monodiffusion mappé à des services de monodiffusion concaténés en utilisant un ordre de concaténation, dans lequel l'ordre de concaténation est un ordre croissant ou un ordre décroissant de paramètres d'identifiant temporaire de réseau radio commun de groupe, G-RNTI, pour les services MBS, et d'un paramètre d'identifiant temporaire de réseau radio, R-NTI, pour les services de monodiffusion.

8. Appareil selon la revendication 7, dans lequel le processeur peut en outre recommuniquer un paquet MBS ou un paquet de service de monodiffusion où le livre de codes HARQ-ACK concaténé indique une demande de retransmission.

9. Appareil selon l'une des revendications 7 et 8, dans lequel le processeur peut en outre communiquer l'ordre de concaténation qui est utilisé pour générer le livre de codes HARQ-ACK concaténé.

10. Appareil selon la revendication 9, dans lequel l'ordre de concaténation utilise au moins l'un des éléments suivants :
une liste de services MBS disponibles ;
une identité de support radio de données, DRB, de 5 bits ; ou
une liste RNTI spécifiée.

11. Appareil selon l'une des revendications 7 à 10, dans lequel l'appareil est un nœud de communication, et dans lequel le nœud de communication est l'un parmi une station de base 5G, un gNB, un nœud B évolué, eNB, un gNB amélioré, en-gNB, ou un eNB de prochaine génération, ng-eNB.

12. Procédé comprenant :
la réception (415) de services de multidiffusion et de diffusion, MBS, et de services de monodiffusion ;
le mappage (430) d'une rétroaction d'accusé de réception de demande de répétition automatique hybride, HARQ-ACK, pour chaque service MBS des services MBS à un sous-livre de codes HARQ-ACK de multidiffusion et de diffusion respectif ;
le mappage (430) d'une rétroaction HARQ-ACK pour les services de monodiffusion à un sous-livre de codes HARQ-ACK de monodiffusion ;
la concaténation (440) des sous-livres de codes HARQ-ACK de multidiffusion et de diffusion et d'un sous-livre de codes HARQ-ACK de monodiffusion en un livre de codes HARQ-ACK concaténé en utilisant un ordre de concaténation, dans lequel l'ordre de concaténation est un ordre croissant ou un ordre décroissant de paramètres d'identifiant temporaire de réseau radio commun de groupe, G-RNTI, pour les services MBS, et d'un paramètre d'identifiant temporaire de réseau radio, R-NTI, pour les services de monodiffusion, et
la communication (450) du livre de codes HARQ-ACK concaténé à une instance temporelle.

13. Procédé selon la revendication 12, dans lequel l'ordre de concaténation est reçu en utilisant un message de reconfiguration de connexion.

14. Procédé comprenant :
la réception d'un livre de codes d'accusé de réception de demande de répétition automatique hybride, HARQ-ACK, concaténé, dans lequel le livre de codes HARQ-ACK concaténé comprend des sous-livres de codes HARQ-ACK de multidiffusion et de diffusion mappés à chaque service MBS des services MBS et un sous-livre de codes HARQ-ACK de monodiffusion mappés à des services de monodiffusion concaténés en utilisant un ordre de concaténation, dans lequel l'ordre de concaténation est un ordre croissant ou un ordre décroissant de paramètres d'identifiant temporaire de réseau radio commun de groupe, G-RNTI, pour les services MBS, et d'un paramètre d'identifiant temporaire de réseau radio, R-NTI, pour les services de monodiffusion.

15. Procédé selon la revendication 14, comprenant :
la retransmission d'un paquet MBS ou d'un paquet de service de monodiffusion où le livre de codes HARQ-ACK concaténé indique une demande de retransmission.
